# EUROPEAN PATENT APPLICATION

(11) **EP 1 696 327 A1**
(43) Date of publication of application: **30.08.2006**
(21) Application number: 05445092.9
(22) Date of filing: 09.12.2005
(51) Int. Cl.: G06F 9/46, G06Q 10/00

(54) **A method and system for serving clients requesting a service from a service provider**

(30) Priority: 10.12.2004 NO 20045412
(71) Applicant: Telenor ASA, 1331 Fornebu (NO)
(72) Inventor: Calvet, Juan Carlos Lopez, 0768 Oslo (NO); Nord, Martin, 3915 Porsgrunn (NO)
(74) Representative: Estreen, Lars J.F.

(57) **Abstract**

A system and method for serving clients requesting a service from a service provider is disclosed. The system includes a queue server (1) with wireless access to a mobile terminal operated by the client. When a client wants to access a service, he/she will contact the service provider from the client terminal, supplying the service provider with the ID of the client terminal, a desired notification time and possibly a "service window". The queue server (1) will register said data in a dynamic queue list with associated schedule of service, and arrange the entries in said queue list based on the desired queuing policy. The server will then transmit a message to the client next to be served at the estimated serving time minus the desired notification time.

## Description

### Field of the invention

The invention relates to queuing and queue management, and is applicable to any service provisioning that involves clients meeting up at the service provider's premises to receive the service. The solution can be implemented to any service that involves queuing of clients before receiving service.

### Technical background

A service provider that depend on making their clients meet up at the service provider's premises to receive the service should ensure that the clients get the service in a specified order (e.g. based on time of reservation, or priority), while minimizing their "on-premises" waiting time. On the other hand, efficient utilization of the service provider's resources should also be achieved. In the past, several solutions have been devised in order to meet these requirements. Today, client queues are managed by either:

### Physical queuing (form a line).

Physical queuing can be made fair (first come, first served) with a minimum of management from the service provider.

The main drawback with this method is that queuing involves waste of time for the clients; since they have to meet up at the service provider's premises before actually receiving the service and since they can't leave the queue because they would then lose their place. This leads to irritation for the clients, and potential loss of clients to competing service providers. Furthermore, this working environment can cause stress for service provider staff.

### Drawing of a queue number when meeting up at the service provider's premises.

When involving a queue number system the client may in principle leave the premises to undertake other tasks as long as he returns to the premises before his turn is up. The queuing time depends on:
- Number of clients being served and waiting in line.
- Number of staff actively working with the clients
- Service time of the clients being served and those waiting in line.

A queue number is available (e.g. new client being number 6 in line) giving the first parameter. However, the client cannot know the other parameters, and a poor estimate of the waiting time follows. Hence, the client will most likely stay at the premises, to make sure that he will not lose his turn.

The service provider controls the second parameter; furthermore, it can perform measurements, giving it a distribution of required service time, which enables it to provide an estimate of the waiting time to an arriving client. This information can be printed on the queue number, allowing the client to leave the premises for the expected waiting time.

Unexpected events may however occur, such as the unexpected absence of an employee, or unusually short or long service times for clients. Hence the time estimate may be very inaccurate.

Main drawbacks of this method are:
- The client has to meet up physically to draw a queue number.
- Inflexible time estimate: Once the estimated waiting time has been printed and given to a client, it is not possible to modify it to take unexpected events into account.
- Dimensioning of service provider resources: The service provider must dimension its resources (manpower) to meet the traffic pattern (more people needed at peak hours). Failing to do so leads to excessive waiting time during busy times, or idle time for the staff during periods with few clients.

### Time reservation by phone calls to the service providers or sending of SMS.

Communication infrastructure enables remote reservation of services at specific times. This includes reservation by phone conversation, and recently, reservation by SMS has been introduced. Examples range from restaurant table reservations to cinema tickets. The reservation procedure looks like this:
1. Client requests a service (e.g. ticket for Film F at Cinema C at time T)
2. Service Provider answers by
   a. either a Confirmation
   b. or Rejection, possibly with suggestion for alternative F, C or T. The client may restart at step 1.
3. The client then shows up at the agreed venue/time.

This method works fine when it is important for the client to know the time of the start of the service so that he can plan his schedule based on this, and when several parties are involved (e.g. arrange to have a meal with friends before the movie).

The scheme requires that the service provider knows when he can offer the service. In a strictly scheduled-based service with fixed service times, such as cinema theatre this is no problem.

However, most services do not have fixed service time (occupation of restaurant tables, dentist services, IT support). Hence this scheme results in one or several drawbacks:
- Dimensioning. Low utilisation of resources (Such as under-booking of tables to be confident that there will be a free table when the client arrives, and refusal of drop-in clients although the tables are not currently occupied, but reserved for half-an hour later)
   OR
- Interruption of service currently in-place when a new client arrives. This requires a follow-up appointment. (typical at dentists' appointment)
   OR
- Make the client wait until there is free capacity to serve him, even when he has showed up at the appointed time (and thus risk that he tries the neighbouring restaurant, if he does not content himself with having a drink in the bar while waiting).

### Examples of existing services:

Museum booking:
   www.museicapitolini.org/en/linea/news_wap_sms.htm
Restaurant table in Prague:
   www.squaremeal.cz/index.php?p=sms
South-African golf reservation:
   www.smsbookings.co.za/home.asp

### Remote notification of turn, by "beeper-like" device.

Some service providers, typically located in shopping malls, offer a beeper-like device to the clients. The clients can do other tasks while waiting to be served, and are confident that once their turn is up, the beeper will notify them. This method suffers two main drawbacks:
- The client must first meet up to receive the beeper and (possibly) pay a deposit in order to receive the beeper.
- If the client changes his mind and will not buy the service from this service provider, he still must return to the service provider to return the beeper and reclaim his deposit.

### Brief summary of the invention

The drawbacks with prior art methods as described above will be remedied by the present invention. Specifically, it is an object of the present invention to provide a method and a system for reservation of a service, which will enable clients to be served in a desired order.

Another object is to minimize the "on-premises" waiting time for the type of clients that has this as an important criterion when it comes to this service.

Another object is to take advantage of the information provided by some clients on "service windows", indicating periods during which the client can receive the service. This "service window" can e.g. be from time of reservation until a certain time of day, or a period later that day. Such clients can be placed in periods where there are the least drop-in clients, to minimize average on-premises waiting time, or the information can be used to more accurately dimension service resources (e.g. number of staff working).

Still another object is to provide a reservation method with effective queue management. The service provider would not have their staff spending time managing the queue, since this is taken care of by the server.

These objects are achieved in a method for serving a multitude of clients requesting a service from a service provider, where the method includes the step of registering a reservation of the service by a client in a queue server, where the method further comprises at least the following steps:
a) registering a reservation of the service by a client in a queue server, by entering an ID of the client terminal, the time the reservation was filed and a notification time desired by the client and a "reservation window" indicating the clients preferred point of time to receive the requested service in a dynamic queue list with associated schedule of service,
b) managing the queue by:
   arranging the entries in said queue list based on the service provider's desired queuing policy taking both the present and expected future number of active service provider resources into account, and
   -managing the queue by taking into account the time the reservation was filed and a notification time desired by the client and a "reservation window" indicating the clients preferred point of time to receive the requested service,
   when estimating service start times and organizing said queue list, and
c) transmitting a message to the client next to be served at the estimated service time minus the client's desired notification time.

The invention also includes a system for serving clients requesting a service from a service provider, where the system includes:
- a queue server,
- a Service Provider Access Interface in said queue server with wireless access to a mobile terminal operated by the clients,
- said server being adapted to receive a service request from said mobile terminal, to maintain a queue list and enter said request in said list, to compute estimated serving times for all entries in said list, and where
said server is further adapted to transmit a message to the clients based on their estimated start of service time and individual notification time.

The scope of the invention is defined in the appended patent claims.

The inventive concept will be more suitable for some applications than others. Specifically, in many situations the waiting time has more value for the client than the specified time of service, whilst other clients want to receive the service as soon as possible. So the idea is that both types of clients can be dealt with in a satisfactory way, in combination with existing solutions.

The most important requirement for the implementation of the system is that the client has to indicate its desired notification time. In some applications (service at a mall, city centre, within the work place) 5 or 10 minutes notification time is sufficient for the client to pause/finish ongoing tasks and go to the service provider.

In other applications (e.g. public office appointments), waiting times could be hours and the client could be far away from the service provider during reservation (e.g. working in another part of the city). Still, many clients would be happy to avoid spending all the waiting time in a physical queue, and instead receive an SMS e.g. an hour before the estimated service time, even if they risk waiting e.g. 10 minutes in the queue before receiving the service. Hence, the notification time's accuracy is relative to the normal waiting time and the time required getting there.

### Brief description of the drawing

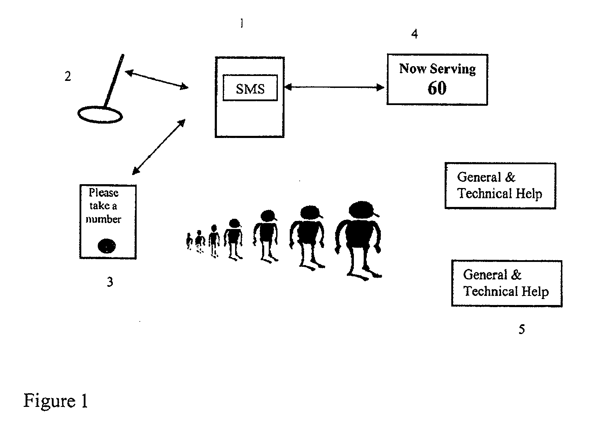

The invention will now be described in detail in reference to the appended drawing, Fig. 1, which illustrates the hardware units that are included in an embodiment of the inventive system.

### Detailed description of the invention

The new solution exploits the ubiquitousness of mobile phones with SMS and the high percentage of clients actively using SMS, to introduce a new SMS based service reservation scheme.

It is suitable for integration with a queue number system, and will be described in such a context, but it is also possible to only base the queue on the proposed technique.

Fig. 1 is a schematic view of the inventive system. The system includes a Queue Server 1 controlling the customers' access to services or resources 5. The Queue Server 1 may be owned by the service provider, but in the following examples it is assumed that the server is the property of the network provider, and may be serving several service providers. The service providers are running the service offered to the customers. The Queue Server 1 is connected to a Service Provider Access (CPA) Interface 2, which is the primary access interface over which the server receives reservations from the customers. The communication with the customers should preferable be wireless, e.g. the customers entering reservations and receiving notifications on handheld wireless devices. The Queue Server 1 is also connected to a Queue Physical Interface 3, e.g. a ticket dispenser, and a Display unit 4. The individual units of the system will be described in detail below:

### 1. Queue Server

The Queue Server is the heart of the system. Depending on the output of the queuing algorithm it controls the Service Provider Access Interface (2), the Queue Physical Interface (3) and the Display (4). The specific interaction that the server has with its peripherals is the following:
- Controls the next number to be retrieved from the QPI.
- Sends and receives SMS messages through the CPA interface
- Controls the number to be shown in the Display

### 2. Service Provider Access (CPA) Interface

The CPA represents several products enabling service providers to deliver services to the network provider's subscribers and at the same time bill the subscribers for using the services. By doing this, the network providers makes their value chain accessible to service providers of mobile services, based on a revenue sharing transaction model in return. The CPA may support SMS, MMS, WAP, WEB, and POS (Positioning).

### 3. Queue Physical Interface (QPI)

This interface has traditionally been a simple ticket dispenser that has no connection to any kind of system. However, newer devices print the ticket at the time the request is made; this type of device is commonly used when there are two queues at the same establishment. The device used for the invention will also print the ticket at the time of request. The number to be dispensed depends on the output of the algorithm calculated by the Queue Server.

### 4. Display

This is a simple display that shows the ID of the next client(s) to be served, possibly with service start estimates.

### 5. Resources

This is the amount of resources that the establishment has to serve the clients at any given time.

Three different embodiments of the inventive reservation system are described below:
1. Basic quasi-FCFS queue
2. Maximum utilization, reservation capable
3. Priority based queuing system
4. Other variations

### 1. Basic quasi-FCFS queue

The CPA-type clients want to minimize their on-premises waiting time, and uses the CPA interface (e.g. telecommunication structure such as phone calls, WEB interface, SMS, to provide the service provider with the following information:
- Contact information: Mobile phone number or other electronic identifier. Automatically registered by CPA if possible). Also serves as identification.
- A notification time: the client's required time to be notified before he is to receive service.
- Latest service time: the latest time the client can show up to receive the service

The Queue Server takes these service requests into account, together with QPI-type clients that physically meet up to draw a queue number from the QPI ("drop-in" clients). When implementing a first-come, first-served queuing policy, based on the time of reservation by QPI or CPA, the program maintains a queue list, and based on the progress of the queue it calls on the clients to be served.

QPI-type clients are notified of their turn by use of the display (although other means are possible).

For the CPA-type clients, the Queue Server takes each client's individual notification time into account, and when it estimates that the remaining time to service start time of a client equals the required notification time, it notifies the client using the requested communication channel (e.g. by sending an SMS). In some situations the queue may be rearranged, and thus is not a strictly FCFS queue, but a "quasi FCFS queue". This may happen e.g. if the last clients' service times were unusually short, and the notification time of the next CPA-type client is too large to take these changes into account. In this case, a QPI-type client may be served first, to maximize utilization of service provider's resources.

The service provider staff only needs to inform the Queue Server of:
- Each time the service of a client is terminated (e.g. by pushing a button at counter)
- How many persons are currently working actively (and possibly in the future).

Note that the administrative tasks for e.g. billing of the CPA-type clients are facilitated since CPA-based reservations either already contains some information on the user found in the network for registered clients and within business environments (name, unit) or when the phone number can be used as means of payment (mobile business).

### Example algorithm: Basic quasi-FCFS queue

To realize the above describe "Basic quasi-FCFS queue", one can implement the following algorithm:

### PARAMETERS

CLIENT PARAMETERS
   - Client ID (CPA identifier or Ticket Number):
      ID e.g. "+47 12345678" or "#112"
   - CPA-type client's notification time:
      T_{_NOTIFICATION}(ID) e.g. 15 min
   - CPA-type client's latest service time start:
      T_{_START-MAX}(ID) e.g. 14:00 GMT
SERVICE PROVIDER PARAMETERS
   - The number of active Servers (e.g. working staff):
      S e.g. 2
   - The current number of elements in queue:
      N e.g. 4
   - Estimate of average service time:
      T_SERVICE-AVERAGE e.g. 8 minutes
   - Current Time:
      T e.g. 13:00 GMT
OUTPUT INFORMATION PARAMETERS
   - Client's Queue Place:
      QP(ID) e.g. # 5
   - Estimate of expected start of service for a QP:
      T_{_SERVICE-START}(QP) e.g. 13:16

### HARDWARE

Scheduler in Queue Server has access to CPA information, a QPI input and display, and knowledge of the Service Provider Parameters: S and T_{_SERVICE-AVERAGE}. In addition, the scheduler must retrieve a signal from the resource servers, each time it completes serving a client. This can be obtained by making the resource servers (e.g. a person working at a counter) push a button after each completion of service, similar to existing queue systems today.

The scheduler maintains a dynamic queue list with N elements. For any change in Service Provider Parameter, the scheduler goes through the list, updates all information and takes necessary action, as explained below.

### CLIENT INTERFACES

- QPI: machine with push-button. Prints a ticket containing ID, QP and T_{_SERVICE-START}(QP).
- CPA Interface: Receives info of ID, T_{_NOTIFICATION}(ID) and T_{_START-MAX}(ID).

### ALGORITHM

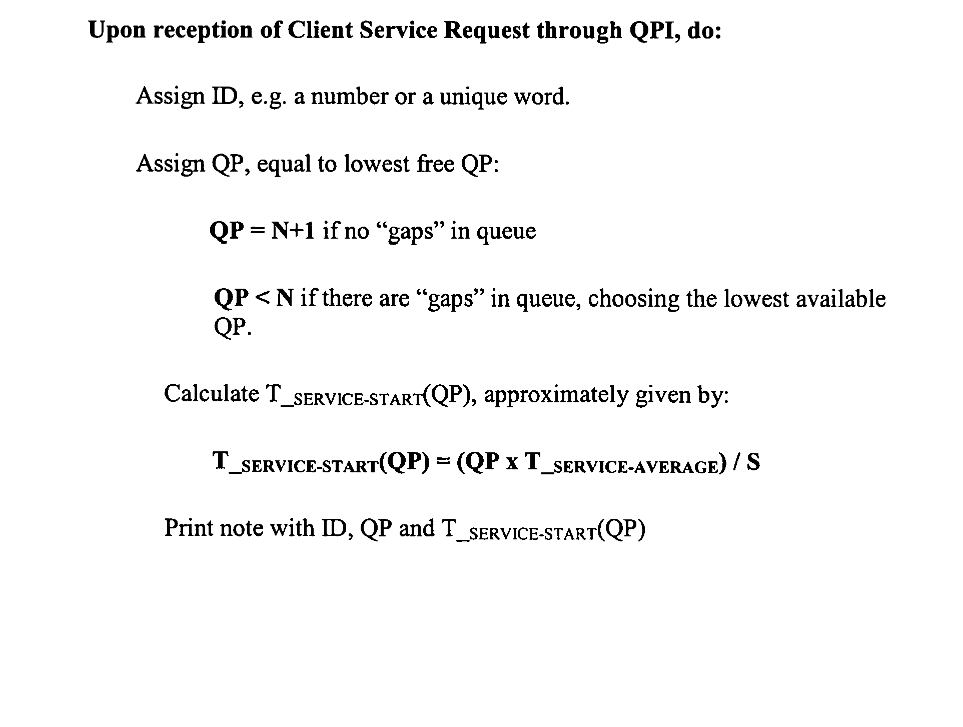

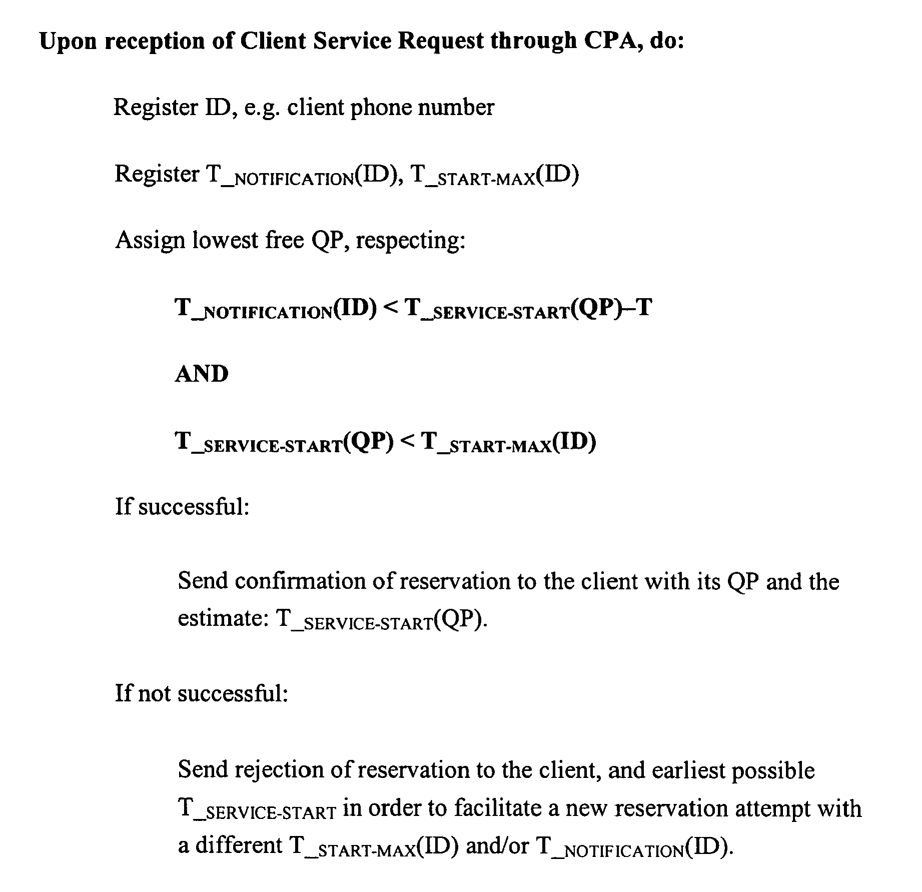

Note that CPA-type clients may create gaps in the queue, when e.g. T_{_NOTIFICATION}(ID) is longer than T_{_SERVICE-START} of the earliest available QP. However, gaps may be filled by QPI-type clients, or by later reserving CPA-type clients with lower T_{_NOTIFICATION}(ID) .

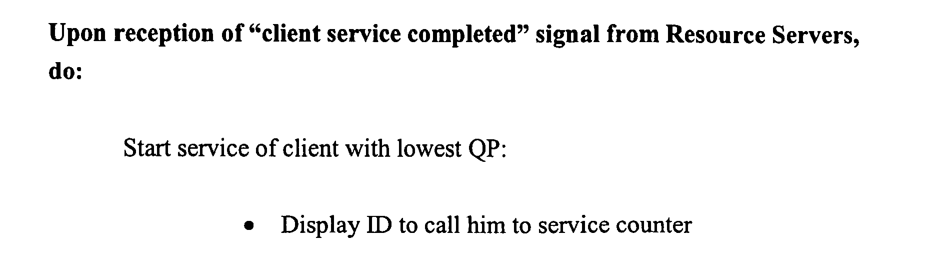

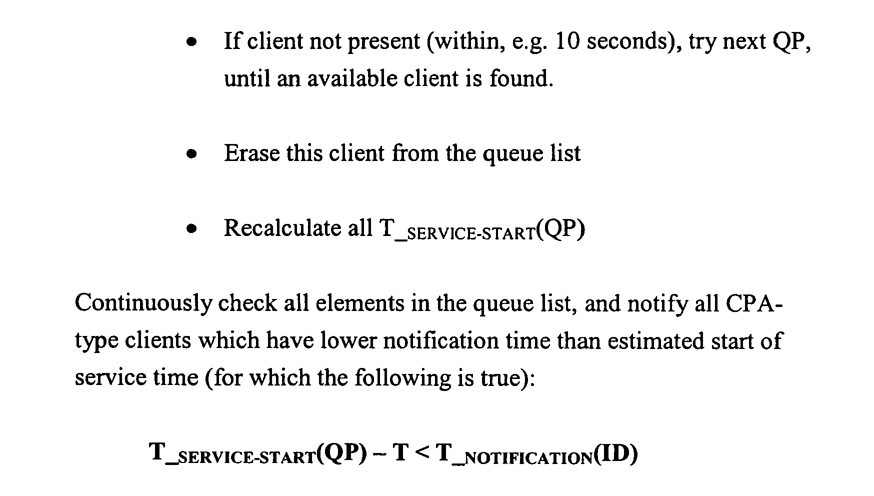

Note that the above algorithm takes into account the possibility to re-arrange queue order, to maximise the utilisation of server provider's resources. Such rearrangements can be attractive when:

Either the client with the lowest QP is delayed and does not show up at his estimated T_{_SERVICE-START}, or when a burst of clients are served unusually fast, so that T_{_SERVICE-START} becomes too pessimistic the next client being a CPA-type client with a too large T_{_NOTIFICATION} to exploit the resulting reduction of T_{_SERVICE-START}.

Whatever the reason, bypassed clients can be maintained in the list by recalculating their QP, until either their T_{_START-MAX}, or a maximum threshold delay, set by the Queue Server, has expired.

Note also that for CPA-type clients, an alias ID may also be used for display purposes, to prevent showing people's phone number, or similar, to other people in queue.

### 2. Maximum utilization, Reservation Capable

- Some CPA-type clients may be willing to provide a reservation window, indicating the periods during which they can receive the service.

Based on the desired queuing policy, the Queue Server maintains a dynamic queue list with associated schedule of services, aiming at serving as many clients as possible, respecting their reservation windows. This provides the same advantages as the quasi first-come, first-served scheme, and additionally it enables both:
- Reservation: When the client gives a short reservation window starting at a later point, it actually reserves a service.
- Traffic engineering: The Queue Server can schedule clients with large reservation windows to be served outside the busy hours and avoiding already reserved times. This maximises utilisation and facilitates dimensioning of resources for the service provider. Such clients could be awarded with e.g. a discount.

Compared to the quasi first-come, first-served scheme, this does not require any more from the service provider's staff, only a more advanced algorithm.

### 3. Priority-based Schemes

Based e.g. on the clients' willingness to pay for the service, the Queue Server could implement a Priority based scheme. This should be reflected in the algorithm, but does otherwise not require any other changes beyond clients notifying of their pay willingness during reservation.

### 4. Other variations

### Require Confirmation of Notification Alert

One could require the CPA-type clients to confirm notification alert by their communication channel (e.g. by SMS), to avoid that clients to not turn up after all. This eases queue management, by improving waiting time estimates.

### Enable "back-off" messages

Enable "back-off" messages after reservation, i.e. upon reception of notification let the CPA-client indicate that he cannot, after all, come to take his place, but that he will again be available in a certain time, indicated in his "back-off" message. This could be useful if the client has e.g. gone for lunch within his reservation window, and do not want to interrupt it for going to the service provider.

### Enable "free-capacity" alerts, to fill gaps

When unexpected free capacity occurs one could notify CPA-type clients that if they show up on a smaller time than their notification time, they will be served earlier than their ordinary turn indicates.

### Integration with other devices

Incorporation with electronic calendars: communication with user's calendar and that of service providers.

### Integration between service providers

In malls it is possible to integrate reservations from same client to different service providers by making the CPA-type clients requesting service from a Queue Server shared by different service providers in the mall:
- Competing services: First service provider that can provide the service, respond by at the time it can offer it (proposal exist)
- Non-competing services: When e.g. a client has several errands in a mall that require waiting, the Queue Server could coordinate the different service providers that are connected to it, after a client has indicated which services he wants. This should include notification from each service provider after the service for the client is completed.

### Other means of notification

The notification could include other means of communication, such as mobile instant messaging, e-mails etc.

## Claims

1. A method for serving a multitude of clients requesting a service from a service provider, where the method includes the step of registering a reservation of the service by a client in a queue server (1),
**characterized in that** said method further comprises at least the following steps:
a) registering a reservation of the service by a client in a queue server (1), by entering an ID of the client terminal, the time the reservation was filed and a notification time desired by the client and a "reservation window" indicating the clients preferred point of time to receive the requested service in a dynamic queue list with associated schedule of service,
b) managing the queue by:
arranging the entries in said queue list based on the service provider's desired queuing policy taking both the present and expected future number of active service provider resources into account, and
-managing the queue by taking into account the time the reservation was filed and a notification time desired by the client and a "reservation window" indicating the clients preferred point of time to receive the requested service,
when estimating service start times and organizing said queue list, and
c) transmitting a message to the client next to be served at the estimated service time minus the client's desired notification time.

2. A method as claimed in claim 1, wherein the client supplies the service provider with an "indication of priority" to be used for prioritizing service of clients.

3. A method as claimed in claim 1, wherein the entries in said queue list are arranged according to a quasi first-come, first-served queuing policy, based on when the reservation was filed.

4. A method as claimed in claim 1, wherein the entries in said queue list are arranged according to a queuing policy aiming to maximize utilization of the service providers resources.

5. A method as claimed in claim 2, wherein the entries in said queue list are arranged according to a queuing policy aiming to differentiate the access to service and/or time of service.

6. A system for serving clients requesting a service from a service provider, where the system includes:
- a queue server (1),
- a Service Provider Access Interface (2) in said queue server (1) with wireless access to a mobile terminal operated by the clients,
- said server being adapted to receive a service request from said mobile terminal, to maintain a queue list and enter said request in said list, to compute estimated serving times for all entries in said list,
**characterized in that** said server is further adapted to transmit a message to the clients based on their estimated start of service time and individual notification time.

7. A system as claimed in claim 6,
**characterized in that** said system includes a queue physical interface (3) connected to said server (1), enabling clients to meet up at the service providers premises and draw a queue number, said queue number being entered in said queue list.

8. A system as claimed in claim 6,
**characterized in that** said system includes a display unit (4) connected to said server (1).

9. A system as claimed in claim 7,
**characterized in that** the display unit (4) is arranged to display the ID of the next client or next clients to be served.

10. A system as claimed in claim 9,
**characterized in that** the system is arranged to display said ID as an alias.

11. A system as claimed in claim 6,
**characterized in that** the server (1) is operated by a network operator, said Service Provider Access Interface (2) being customized according to the preferences of the service provider.

12. A system as claimed in claim 11,
**characterized in that** said system being adapted to supply payment information for each client served to the network provider which then bills the client for the service.

13. A system as claimed in any of the claims 6-12,
**characterized in that** several competing service providers operating in a given area are connected to the server (1), the service provider that first can provide the service is sending the message to the next client to be served.

14. A system as claimed in any of the claims 6-12,
**characterized in that** several service providers operating in a given area are connected to the server (1) in order to avoid conflicting serving times.
